# EUROPEAN PATENT SPECIFICATION

(11) **EP 0 719 180 B1**
(45) Date of publication and mention of the grant of the patent: **05.04.2000**
(21) Application number: 94929744.4
(22) Date of filing: 09.09.1994
(51) Int. Cl.: B05B 7/04, F23D 11/10

(54) **V-JET ATOMIZER**
V-JET ATOMISATEUR
ATOMISEUR A JET EN V

(30) Priority: 15.09.1993 US 120826
(43) Date of publication of application: 03.07.1996
(73) Proprietor: ELECTRIC POWER RESEARCH INSTITUTE, Palo Alto, CA 94304 (US)
(72) Inventor: HERSH, Stuart, New York City, NY 10956 (US); GIOVANNI, Dan, V., Berkeley, CA 94705 (US); KERHO, Stephen, E., Mission Viejo, CA 92691 (US); CONTI, Anthony, V., Patterson, NY 12563 (US)
(74) Representative: Herzog, Markus, Dipl.-Phys. Dr.
(86) International application number: PCT/US94/09768
(87) International publication number: WO 95/07761

(56) References cited:
- EP-A- 0 314 354
- EP-A- 0 419 198
- FR-A- 2 500 331
- GB-A- 2 186 507
- US-A- 1 874 002
- US-A- 2 914 257
- US-A- 4 195 779
- PATENT ABSTRACTS OF JAPAN vol. 10, no. 207 (M-500) 19 July 1986 & JP,A,61 049 908 (BABCOCK HITACHI KK) 12 March 1986

## Description

This invention is directed to the distribution of an atomized liquid fuel in an atomizing gas and to means for spraying such. It more particularly refers to a novel atomizer apparatus, including a novel spraying nozzle, and the use thereof.

It is well known that there are many occasions when it is necessary or desirable to form a spray of a liquid in a gas. One such time is in the combustion of a liquid fuel with a gaseous oxidant, for example air, as the means for heating a boiler.

In the field of combusting liquid fuel, it has been found that it is important to effectively control the quality of the sprayed fuel in order to control the potential environmental hazards which the effluent from the combustion may create. The potential for creating effluent which is detrimental to the environment from combustion processes, particularly large oil-fired steam generators, has been exacerbated in recent years by a continued reduction in the quality of the liquid fuel being burned. This has become particularly troublesome where residual fuel is being burned.

The problem with the residual fuel which is now being fed to the burners of large steam generation facilities is that its heavier fractions have a tendency to form larger, heavier cenospheric coke particles during combustion. As the Conradson carbon number of the fuel increases, and the hydrogen to carbon ratio of the fuel decreases, as is the case with the use of residual fuel, the tendency of the fuel to be less completely combusted increases whereby the problem of coke particulate emissions is aggravated.

As bad as the situation has become over the recent past, it is reasonable to expect that it will get worse during at least the near term in the future. Thus, it is important that means be found to assist in the utilization of residual fuel to fire steam boilers whereby particulate emissions therefrom are reduced to a manageable level, and whereby more of the energy contained in the residual fuel is used.

Oil fired boilers are usually equipped with burners which are specially designed to combust oil with air to generate the heat necessary to create the desired steam. One of the principal components of the burner is the atomizer, that is, the member which atomizes the oil to allow it to be readily and efficiently combusted with the air oxidant. The atomizer produces a spray of droplets containing the oil which are then contacted with the air.

One of the detrimental effluents produced by the combustion of oil with air is NOX. The quantity of NOX which is produced is known to be a function of the flame temperature, the local fuel/air stoichiometry and the intimacy of fuel/air mixing. The nature of the oil spray substantially effects the localized fuel/air mixing through droplet dynamics (droplet inertia) and spatial spray distribution. Therefore, the intimacy of mixing of atomizing gas and oil to form the atomized spray, the intimacy of mixing the combustion air with the atomized oil droplets, and the nature of the atomization are quite influential on the NOX emissions of the burner.

The quality of the performance of the burner is often directly proportional to the performance of the atomizer. Atomizer performance is commonly measured in five (5) ways: (1) the Sauter Mean Diameter, often abbreviated SMD, of the size distribution of the atomized oil droplets; (2) the uniformity of oil mass flux around the periphery of the conically shaped spray of oil; (3) the apex angle of the spray cone; (4) the quantity of atomizing fluid, such as air, steam, or a mixture thereof, needed to produce a spray having a given, pre-specified Sauter Mean Diameter; and (5) the variation of these parameters over a specified range of oil flow rates in a given burner construction. It has been determined in the past that superior atomizer performance, in terms of these parameters: reduces carbonaceous particulate emissions, increases the caloric yield, and therefore expands the range of oils which can be used in this service.

In the past, a wide variety of atomizer designs have been used for this service. These have usually fallen into two general categories: dual fluid atomizers and, mechanical atomizers. Dual fluid atomizers derive the energy, which they need to convert the liquid fuel into droplets, by the interaction of the fuel oil with an atomizing fluid, such as air, steam or a mixture thereof. Mechanical atomizers usually rely on pressure on the liquid fuel, which forces such through a restricted orifice, to disrupt the fuel liquid into droplets.

Dual fluid atomization can usually be accomplished in one of two ways. According to the internal mixing method, the two fluids are both simultaneously impacted against a suitable plate, such as a back plate of a mixing chamber, from which impact they then fill that mixing chamber with the intimate mixture of both fluids. The mixture is then ejected through a nozzle, suitably located in the atomizer spray plate, into the combustion zone of a furnace.

According to another method, the external mixing method, liquid fuel and gas are each independently fed into a common chamber, or several chambers, one for each exit aperture, at intersecting angles to intersperse the two fluids into a mixture. The mixture is then ejected from a suitable nozzle, which nozzle may be an integral part of the chamber housing.

Mechanical atomization may be of the type in which all of the fuel oil, which is to be fed to an atomizing nozzle, is ejected into the combustion zone of a furnace, where it meets with combustion supporting air. The amount of oil fed to the furnace is controlled by controlling the amount of oil fed to the atomizer. This is referred to as a once through, or Simplex, atomization. In the so called return flow type of atomization, the oil flow to the atomizer is maintained at a constant level, but only a portion of the oil is fed into the furnace with the rest of it being recycled to the fuel oil reservoir. In any of these cases, in addition to the aerodynamics of the burner, the creation of droplets containing the fuel oil, and the physical properties of these droplets are major determinants with respect to the quality of the fuel oil combustion in the furnace.

From U.S. 2,914,257 A there is known an atomizer for atomizing a liquid or a gaseous fuel in a gas and combusting the atomized fuel. The atomizer comprises a nozzle which defines a plurality of substantially conically arranged passageways separated from each other by separation ribs. These separation ribs extend nearly tangent to the circle, on which the passageways are distributed. Also the separation ribs occupy a major portion of the nozzle in the circumferential direction thereof, whereas the passageways occupy a minor portion of the nozzle.

From EP 0 314 354 A1 there is known a spray nozzle having several passageways which are separated by separation ribs. However, this spray nozzle serves for atomizing and spraying water for use in a fire control system. Therefore, the document EP 0 314 354 A1 cannot give any hint how to design a nozzle in order to improve the overall efficiency of the combustion of a liquid fuel in a burner.

It is an object of this invention to provide an improved atomizer designed to improve the overall efficiency of atomization of a liquid fuel and therefore to improve the overall efficiency of mixing the atomized fuel and a gas, for example steam, in order to improve the overall efficiency of the combustion of the fuel in a furnace.

It is a further object of this invention to provide an improved process of combusting fuel oil, based on an improved atomizer design, in which the size and mass distribution of the less desirable emitted carbonaceous particles are limited whereby enhancing the burn-out of these particles.

It is a still further object of this invention to provide an improved atomizer design which will produce a spray of atomized fuel particles having characteristics that promote mixing thereof with combustion air, particularly in burners with low primary air flows, or with recirculation flows at the axis of the burner.

It is a still further object of this invention to produce desirable fuel/air mixture ratios in a zone near the burner of an oil-fired furnace, and to minimize any excess oxygen requirements of the system, thereby substantially reducing the NOX emissions produced by the system.

It is a still further object of this invention to provide a novel atomizer design which is capable of producing a segmented stream of atomized liquid fuel having disproportionate stoichiometry in the various spray segments.

In accord with and fulfilling these objects, the invention provides a method and an atomizer for combusting liquid fuel according to claim 1 and 8, respectively.

The atomizer may comprise:
a main body, which defines a generally centrally located, circumferentially defined open space;
a first conduit means, adapted to communicate through said main body with said open space, to carry fuel oil through said main body and into said open space; and
a second conduit means, adapted to communicate through said main body with said open space and to carry atomizing gas through said main body into said open space.

The main body of the atomizer of this invention may comprise:
one or more side walls, which may be straight or curved as desired and required;
a back plate member in closing contact with the side wall(s) defining one end of the main body, and a first end to the open space; and
a front member, which defines a second end to the open space, at the end thereof opposite to the back plate member.
The side wall(s), the back plate member, and the front member define and confine an internal mixing chamber. The front member may have a generally conical, preferably a right circular frustroconical, slot therein which may be axially aligned with the general center of the mixing chamber. Preferably, the mixing chamber is substantially cylindrical, and there is substantially exact alignment of the axes of this cylinder and the conical slot.

This conical slot is in the front portion of the atomizer assembly, suitably either wholly within the front member, or partially within the front member and partially within or defined by the side wall(s) of the main body. Preferably the conical slot is at the juncture between the front member and the side wall(s) of the main body of the atomizer of this invention. This slot serves as an exit means and thereby communicates between the internal mixing chamber and the combustion chamber into which the atomized fuel is intended to be sprayed. Where required, means may be provided, suitably disposed through the mixing chamber, to operatively support the front member by at least the back plate member of this apparatus.

The conical spraying nozzle is segmented. That is, the free passage of atomized fuel through the cone of the nozzle is interrupted one or more times, by piers suitably disposed around its periphery. In addition to their functional use in determining the geometry of the atomized fuel sprayed from the nozzle, these piers may also form the support structure for joining the inner surface of the cone to the outer surface thereof to form the nozzle (channel). The conical spraying nozzle may be formed between the front member and the side wall(s) of the main body, and the front member may be supportingly joined to the side walls at one or more places around the periphery of the conical slot. These joining members, or piers, may extend only part way along the length of the nozzle. That is they may extend from the front of the conical nozzle in contact with the furnace combustion chamber part way back along the length of the conical channel. In the alternative, these joining members can be located toward the rear end of the conical channel starting from the mixing chamber end thereof and extending only part way along the length of the conical channel. If desired, multiple piers may be provided along the length of the conical slot. It is preferred, however, to have these pier members extend along the complete length of the conical slot from the point where the mixing chamber communicates with the slot, to the place where the slot communicates with the combustion chamber into which the atomized fuel will be sprayed. Preferably, there are a multiplicity of these joining members, or pier assemblies, spaced about the periphery of the conical slot. The preferred configuration is symmetrical, but the pier distribution may be asymmetric if desired.

The novel atomizer described here is adapted to be operatively associated with peripheral apparatus, such as:
means to supply the atomizing gas,
means to supply the fuel to be atomized,
means to pressurize any or all of: the atomizing gas, the fuel to be atomized, and atomized fuel,
receptacle means, i.e. the combustion chamber of a furnace means, into which the mixture of the atomized fuel and the atomizing gas, is sprayed, and
means to introduce all or additional combustion supporting gas, such as air, if needed, into the combustion chamber,

This invention will be better understood with reference to the drawing, which is illustrative thereof, and in which:
Fig. 1 is a side sectional view of an atomizer designed according to one preferred aspect of this invention, which is provided with mean for adjustment of the exit channel width;
Fig. 2 is a plan view of one of a preferred nozzle design which is adapted to use in this invention;
Fig. 3 is a view of the preferred nozzle shown in Fig. 2 which has been sectioned along the line 3 - 3. This Fig. 3 is a perspective view which looks generally in the direction of the arrows;
Fig. 4 is a side view of the preferred nozzle design shown in Fig. 2. sectioned along the line 4 - 4 looking in the direction of the arrows;

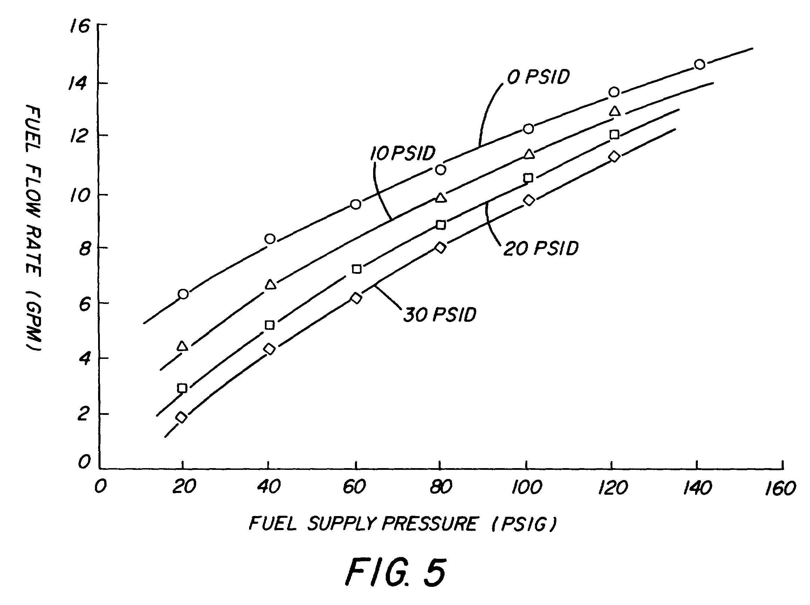

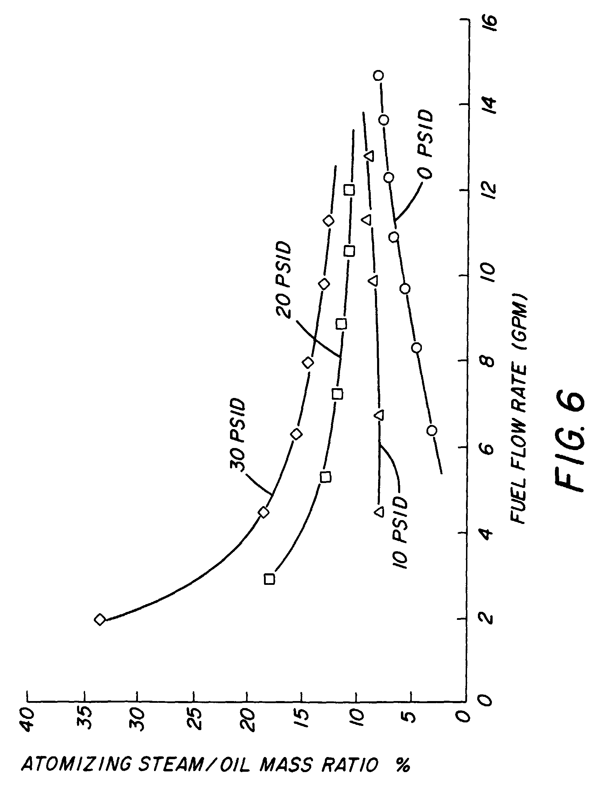

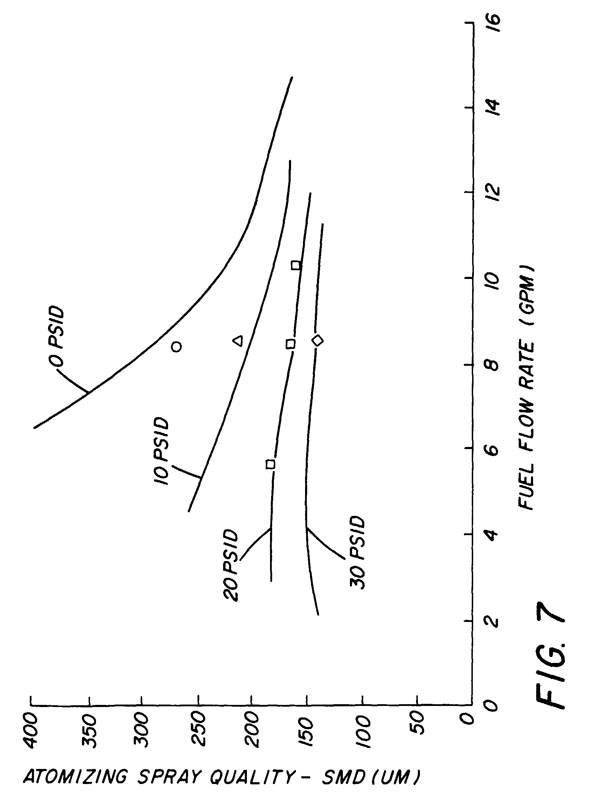

Figs. 5 - 7 are a typical series of curves depicting various relationships between the design of the atomizer of this invention and the properties of the spray provided thereby. These curves are provided as examples of the operation of this invention. Each specific operation, with its own unique parameters of operation will produce its own unique set of similar curves. In each figure, the specific relationship being depicted is set forth. Fig. 5 shows the relationship between Fuel Flow and Supply Pressure; Fig. 6 shows the relationship between Atomizing Mass Ratio and Fuel Flow; and Fig. 7 shows the relationship between Atomizing Spray Quality and Fuel Flow.

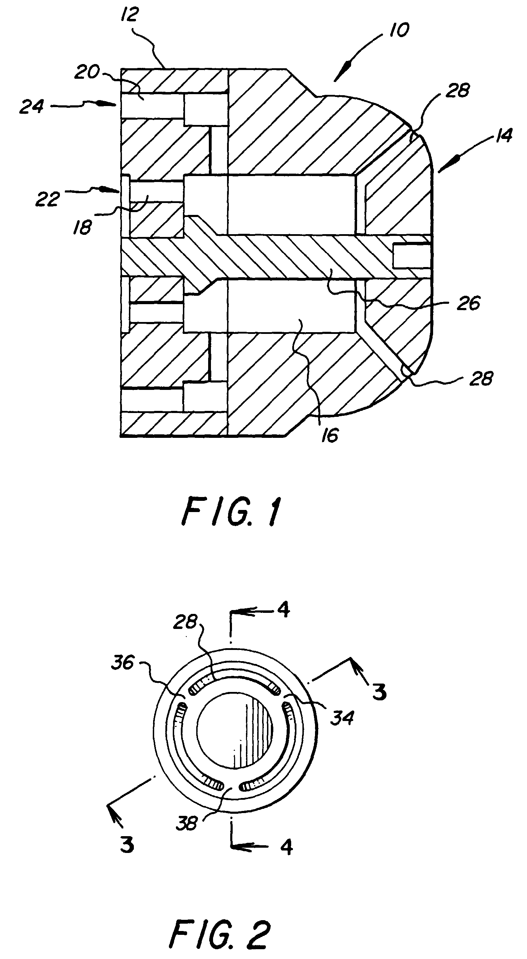

Referring now to the drawing, this invention will be described with reference to the atomization of fuel oil, as the liquid to be atomized prior to its combustion, with steam, as the atomizing gaseous fluid. Referring now to Fig. 1, an atomizer according to this invention is shown comprising a generally hollow cylindrically shaped main body 10; a back plate means 12, substantially diametrally disposed across and enclosing one end of the generally hollow main body; and a front plate means 14, substantially diametrally disposed across and enclosing the other end of the generally hollow main body, to thereby form an enclosed cavity, which serves as a mixing chamber 16 for use in this invention. There is suitably provided passage means 18 and 20 communicating sources of oil to be atomized (not shown) and atomizing steam (not shown) with the mixing chamber 16, preferably through the back plate means 12. These passage means are adapted to allow the introduction into the mixing chamber 16 of the liquid 22 to be atomized and the atomizing gas 24. It should be noted that the specific arrangement of liquid oil and atomizing steam supply passages is not critical. In some applications, these passages are reversed from the locations depicted here. The front plate means 14 is suitably mounted on the other end of the mixing chamber 16, and may be supported by the back plate means 12, such as by means of a pillar 26 which may pass through the mixing chamber 16.

At a location which may suitably be anywhere in the walls surrounding the mixing chamber 16, but is preferably in, or at least very near to, the front plate means 14 of this atomizer apparatus, there is provided at least one suitable opening 28 which is adapted to allow the atomized mixture to be ejected out of the mixing chamber 16. The opening 28 is a conical passageway of a size and shape sufficient to produce a conical spray of atomized vaporous material into the combustion chamber. In a preferred aspect of this invention only one such conical shaped opening is provided for each mixing chamber, but it is possible for there to be two or more.

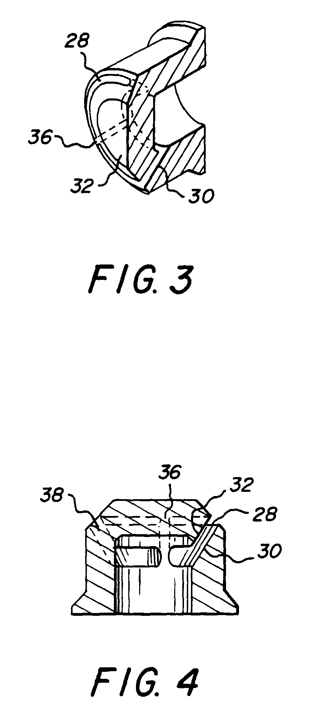

According to a preferred aspect of this invention, the conical shaped slot passageway or nozzle 28, which is shown in greater detail in figs. 3 and 4, is made up of a pair of spaced apart walls 30 and 32 which define the conical passageway of the nozzle of this invention. These walls are preferably generally concentric and thereby define a conical passageway which has a substantially uniform cross-sectional dimension or thickness. In other words, according to a preferred aspect of this invention, the conical nozzle neither diverges nor converges in thickness between the mixing chamber 16 and the area into which the atomized fuel is being sprayed. The width (or thickness) of the conical channel is whatever width is suited to the throughput of atomized fuel and the viscosity thereof. Suitably, the apparatus of this invention is equipped with means for adjusting the thickness of the conical channel slot. It has been found that non-limiting channel thicknesses might be about 0,794 to 12,7mm. Thicker or thinner channels are also suited to use in this invention. The angle of the conical nozzle passageway is suitably about 50 to 100°. However, larger or smaller angles can be used in special situations.

It is considered to be within the scope of this invention to provide a conical nozzle means as described above in which the spaced apart walls, which form the conical nozzle, do either converge or diverge, as needed, at the point where the atomized mixture is sprayed out of the nozzle into the combustion chamber. This divergence or convergence is accomplished by providing the walls of the nozzle as cones of differing apex angles, but which preferably have common virtual apices. The angles of convergence or divergence are not particularly critical, but are typically small. Thus, convergent or divergent angles of the walls of the conical channel might be up to about 15°, preferably not greater than about 5°.

The conical nozzle is preferably made up of two frustro right circular conical surfaces. However, the frustro conical surfaces do not necessarily have to be circular in cross-section. They may alternatively be elliptical in cross-section, or even irregular in cross-section, if this gives a desirable spray pattern of the atomized fuel.

As will be seen in Figs. 2, 3 and 4, the invention provides internal pier support-spacer means 34, 36 and 38, within the conical channel passageway 28. In the views shown in Figs. 2, 3 and 4, three such support means are shown. However, this specific number of support means is not critical to the practice of this invention. It is possible to use two or four or even more such support-spacer means as needed for the particular design of the nozzle being used in the embodiment of this invention which is being practiced. According to a preferred practice of this invention, these support-spacer pier means should preferably be spaced symmetrically about the conical nozzle passageway. Thus, if there are three such support means, they should preferably be spaced about 120° along the cone axis; if there are four pier means, they should be spaced apart about 90° each. However, the spacing may be asymmetric if this will give the spray of atomized fuel that is desired.

The support-spacer means used in the conical spray channel can extend throughout the length of the channel all the way from the mixing chamber end to the combustion chamber end thereof. However, it is also within the scope of this invention for the spacer-support means to be located only partially along the length of the conical channel. In order to supply specialized support and spacing functions, the spacer-support means may be located anywhere in the conical channel.

However, it has been discovered, and it is an extremely important discovery within the context of this invention, that spacer-support means located at the exit point in the conical nozzle passageway have an important segmentation effect on the geometry of the spray which emerges from the nozzle. The number and the spacing of these exit point spacers has a dramatic effect on the geometry of the atomized spray, on the characteristics of combustion of that spray, and on the particulate, and NOX emissions produced.

It has been reported elsewhere, see United States patent number 4,790,480, that disrupting a conical spray, from the exit of a nozzle, after it leaves the nozzle and as it is being fed into a combustion chamber, causes substantial improvement in the combustion characteristics of the atomized fuel in the combustion chamber. When the conical stream is broken up after it leaves the nozzle, there is substantially improved burn-out accomplished, and the combustion of the fuel oil is substantially more complete thereby reducing the potential adverse effects of the off gas generated by the combustion.

In that patent, there is described means disposed outside of the nozzle that breaks up the atomized stream after it leaves the nozzle. This is to be distinguished from the structure of the instant invention where the stream comprising fuel passing through conical nozzle passageway is broken up within the nozzle, that is before it exits the nozzle and becomes a spray. The spray which is produced according to the practice of this invention is a segmented, substantially conical spray, with non-uniform segments of spray about the entire periphery thereof. These segments may have different bulk densities and/or compositions. That is, because of the interposition of the support-spacer pier means in the conical nozzle passageway, the spray which comes out of the nozzle of this invention has a non-uniform bulk density, composition and pattern as a function of the location of the support-spacers. Thus, alternating fuel-rich and air-rich segments can be created around the periphery of the spray cone. By constricting this spray inside the nozzle means, the adverse consequences of externally disrupting the spray, which is shown in the '480 patent, are avoided.

The NOX and particulate emissions have been found to be substantially reduced by the practice of this invention and particularly by the use of the special nozzle design which is described herein. During tests of the novel nozzle design of this invention, using heavy fuel oil as the atomized feed, it was found that the excess oxygen requirement, that is the amount of excess oxygen which is required to insure maximum combustion of the fuel oil within the operating parameters of the system, was substantially decreased. This decrease in the excess oxygen requirement and the alternating fuel-rich and air-rich spatial distribution of the segmented spray causes the NOX emissions to be substantially decreased. Increased boiler efficiency was also obtained with the decrease in the excess oxygen requirement.

The mixing chamber and the nozzle may be made of any materials which are convenient and which will withstand the rigors of the fluids being contacted therewith and the temperatures and the pressures at which these fluids are contacted therewith. Thus, if the fluids are corrosive, the materials of construction should be able to withstand corrosion by these fluids for at least an acceptable service life. Metals and plastics are the usual materials of construction, with steel being especially desirable in most cases. It is considered to be within the scope of this invention to provide suitable coatings on the surfaces of the enclosure for the mixing chamber, the spraying nozzle and the other elements of this apparatus. Suitably, these coatings may render the underlying construction materials resistant to deterioration by contact with or passage of the contained fluids. For typical oil fired furnace-boiler applications, the atomizer assembly (the main body, nozzle assembly, passageways, and the support shaft if employed) can preferably be constructed of tool steel, such as H-13 Rc 53-56 tool steel, or for more corrosive environments and application, AISI 440C pre-heat-treated steel.

With the atomizer design according to this invention specifically adapted for use in atomizing heavy fuel oil with atomizing steam, it has been found that, for a given atomized fuel to atomizing fluid pressure differential, the quality of the spray produced by the practice of this invention will not vary to any appreciable degree as a function of the size of the conical nozzle passageway. It has been found that when the fuel oil to atomizing steam pressure differential was held substantially constant at about 68,95 kPa, and the gap in the conical nozzle was varied from about 1,98mm to 2,54mm, the SMD (Sauter Mean Diameter) varied only about 4 µm from about 66µm to about 70µm. However, under these conditions, as the gap setting was increased from 1,98mm to 2,54 mm, the exit velocity of the fluid decreased about 25%. It was also found that the fluid pressures which were required to maintain equivalent fuel flow decreased proportionately to the increase in gap, because the fluids passing through the gap met less resistance to flow at the wider atomizer exit.

It was found that the adjustment of the exit gap width allowed the NOX emissions to be reduced, by providing lower excess oxygen requirements for a wide range of fuel to atomizing fluid pressure differentials. Thus, variations in fluid velocities, small changes in effective spray angle, and the relative penetration of the fuel spray into and about the internal recirculation zone (IRZ) in the combustion chamber, which are associated with variations in the gap size, appear to have a significant impact on the excess oxygen requirement, and the fuel/air mixing rate that is required to support substantially complete fuel combustion with a minimum of NOX emissions. The internal recirculation zone (IRZ) is a zone formed downstream of the atomizer exit at sufficiently high levels of combustion air swirl in which combustion products are caused to be circulated back towards the fuel spray exiting the atomizer nozzle.

It has been pointed out above that the front plate means can suitably be supported by means of a center body 26 extending from the back plate means to the front plate. It has also been pointed out that this is not an essential configuration of the apparatus of this invention, but that the front plate means and nozzle means could be assembled in a different manner. In initial prototype evaluation, it has been found that it is preferred to utilize a center body support means which is threaded at the nozzle-front plate means end. In this manner, the gap in the conical nozzle passageway can be readily adjusted by simply turning one surface thereof relative to the other about this threading.

Designs of nozzle means according to this invention can be assembled so that the spray is of only one or more portions of a cone. Thus, a full conical spray may be used, a partial conical spray may be used, or multiple spray segments, which are each portions of a cone, may be used. As an example of such multiple partial conical areas, a segmented V-jet with two (2) conical exit slots has also demonstrated reductions in NOX emissions of up to about 40% by being able to minimize the excess oxygen requirements of the system, by being able to adjust the stoichiometry of air and fuel about the conical spray, and by producing desirable fuel/air ratios in the zone near the burner. Further, such segmented nozzle sprays have. encouraged more thorough combustion and have therefore produced off gases of substantially lower opacity, which are therefore more environmentally acceptable.

In practicing this invention, it has been found that the angle at which the atomizing gas and the fuel being atomized, respectively, enter the mixing chamber of the apparatus of this invention is an important consideration in the design of this apparatus from the perspective of efficiency of operation. It has been found to be most preferred for each of the atomizing gas and the fuel being atomized to impinge upon the back plate means of the mixing chamber and to impact thereon at about a right angle. Of course, this is not an absolute limitation. The angle may vary from 90° to some extent, for example from about 75° to 105°, without substantially jeopardizing the advantageous results which are achieved by the practice of this invention. This provides for dynamic mixing of the atomizing gas and the fuel to be atomized, improves atomization, and reduces the consumption of atomizing gas in the operation.

The transport conduits which bring the atomizing gas and the fuel into the mixing chamber may be located in a radial or a tangential manner with respect to the chamber. Where tangential introduction is employed, the two fluids can be introduced in co- or counter-current rotational direction with respect to the external air flow established by the burner flame stabilizer and registers. By introducing angular momentum to the fluids being introduced into the mixing chamber, it is possible to influence some of the combustion characteristics of the atomized fuel. For example, co-rotating the fluids will decrease the fluid volume flux in the near portion of the burner zone, and thereby reduce fuel rich areas therein. Such a design will increase the spray quality uniformity, and it will also positively effect fluid velocities and penetration of the atomized mixture into the near burner zone.

In designing the mixing chamber and conical nozzle assembly of this invention, and in establishing the operating conditions for a process using this apparatus, it is possible to introduce variations in size and shape which will affect the residence time in the mixing chamber. Thus it is possible to optimize this residence time. It is preferred that the mixing chamber be directly upstream of the conical nozzle, and that the combustion chamber be immediately downstream of the conical nozzle. By assembling these elements in very close proximity, it is possible to minimize the time lag between atomization in the mixing chamber and combustion in the combustion chamber. The closer these elements are to each other, the less is the likelihood that the atomized condition of the fuel will break down prior to combustion thereof.

The V-jet atomizer of this invention provides substantially constant spray quality into the combustion zone. The droplet size and atomizing mass ratios (steam to oil) are substantially constant over a wide range of fluid input pressures for a given atomizing gas to fluid pressure differential in the range of between about 68,95 and 206,85 kPa. In a V-jet operation according to this invention at a pressure differential of about 68,95 kPa, a typical operating system can operate at mass ratios of only about 10%. Because operating in the manner of this invention with the apparatus of this invention still provides excellent atomization even at very low input pressures and flows, this condition allows the operator to be able to turn down the furnace/boiler, that is to reduce boiler load, without having to shut off burners and thereby remove burners from service.

The following example is illustrative of the practice of this invention. It is not to be considered as being in any way limiting on the scope of the invention or of the claims appended hereto. In this example, parts and percentages are by weight unless specified to be on some other basis.

### Example

An internal mix V-jet atomizer design was tested using a heavy oil to feed the burners of a 68,04 t/h utility package boiler. The boiler fired low sulfur (<0.3%) No. 6 fuel oil and used steam as the atomizing fluid. The prototype atomizer tested had an adjustable gap setting feature and an effective spray angle of between 70 and 75°. Reference is made to Fig. 1 of the attached drawings for design details.

The conical spray nozzle-atomizer was tested at three exit gap settings, 1,98 mm, 2,26 mm and 2,54 mm. As the gap setting was increased from 1,98 mm to 2,54 mm, the fluid exit velocities were significantly decreased, by about 25%. The fluid pressures required to maintain a particular fuel flow were also reduced as the exit gap width increased. At each of the gap settings, a range of operating parameters was evaluated, including: 1) fuel oil to atomizing steam pressure differential, 2) fuel flow, 3) excess O₂ requirement levels, 4) burner register swirl, 5) various flame stabilizer designs, and 6) oil gun and stabilizer axial position.

For each of the flame stabilizer designs (curved vane swirlers) and V-Jet exit gap settings (and combinations thereof) examined, it was noted that the NOX emissions were significantly decreased as the fuel oil to steam pressure differential (ΔP) was increased from 0 to 137,9 kPa. In most cases, as the ΔP was increased, and the spray quality thereby improved (reduced droplet sizes), less excess O₂ was required to maintain low opacity levels. This reduction in the required excess O₂ level resulted in a significant reduction in NOX emissions. This effect was particularly apparent under moderate register swirl conditions.

For a given fuel oil to atomizing steam pressure differential, the spray quality (as calculated) did not vary significantly as a function of gap settings. However, the mid-range gap setting of 2,26 mm, provided lower NOX emissions and lower excess O₂ requirements for fuel oil to atomizing steam pressure differentials of 0 and 68,95 kPa. Thus, variations in the fluid exit velocities (and perhaps slight variations in the effective spray angle), and variations in the relative penetration of the fuel spray into and about the IRZ, associated with the variation of the gap size, had significant impacts on the level of excess O₂ required, the local fuel/air ratios, the fuel/air mixing rates, and the resulting NOX emissions.

A segmented V-jet design was also evaluated during the above test program. This design, which segmented the fuel spray into two portions of a complete cone (highly fuel rich areas), was shown to produce the lowest NOX emissions of all atomizers tested during the field demonstration. That is, lower than all standard, Low-NOX, and other novel atomizer designs. A NOX reduction of approximately 43% (as compared to the original boiler hardware) was documented, with no observed increase in particulate matter emissions.

An additional segmented V-jet with two (2) exit slots, was tested on a face-fired boiler with eight (8) Peabody APR 21 burners. Again, the use of this atomizer design resulted in NOX emission reductions of about 40% from the baseline conditions, despite significant differences in burner configuration from the previous example.

## Claims

1. A method of combusting liquid fuel (22), comprising the steps of:
- atomizing said liquid fuel (22) with an atomizing gas (24) in a mixing chamber (16) to form a mixture of atomized liquid fuel droplets in said atomizing gas (24),
- forcing said mixture of said atomized liquid fuel droplets in said atomizing gas (24) through nozzle means (28), thereby forming said mixture into a substantially conically shaped spray emerging from said nozzle means (28) towards a combustion chamber, said nozzle means (28) defining a direction of longitudinal extension from an end of said nozzle means (28) proximate to said mixing chamber (16) to an end of said nozzle means (28) proximate to said combustion chamber, and
- contacting said spray with at least a sufficient amount of oxidizing gas to combust at least a substantial portion of said liquid fuel under conditions conductive to the combustion of said liquid fuel with oxygen in said oxidizing gas,
**characterized in**
that the step of forcing said mixture through said nozzle means (28) comprises forcing said mixture through a plurality of substantially conically arranged passageways (28) separated from each other by segmentation means (34, 36, 38) substantially extending in said direction of longitudinal extension of said nozzle means (28) and extending at least part way along the length of said nozzle means (28) from the end thereof proximate to said mixing chamber (16) to the end thereof proximate to said combustion chamber, said segmentation means (34, 36, 38) occupying a minor portion of said nozzle means (28) in a circumferential direction thereof, such that said spray emerging from said nozzle means (28) is a segmented spray with alternating fuel-rich and fuel-lean segments and has a non-uniform bulk density and/or composition along its periphery.

2. Method of claim 1, wherein the liquid fuel is fuel oil.

3. Method of claim 1 or 2, wherein the oxidizing gas is air.

4. Method of claim 3, wherein the liquid fuel is heavy fuel oil and the non-uniformity of said conical spray together with the ratio of air to fuel oil is sufficient to minimize the production of NOₓ.

5. Method of one of claims 1 to 4, wherein the liquid fuel and the atomizing gas are impacted against an inside wall of said mixing chamber under conditions sufficient to cause intermixing of the fuel and the atomizing gas and to cause atomization of the fuel in the atomizing gas.

6. Method of one of claims 1 to 5, wherein the atomizing gas comprises air and/or steam.

7. Method of one of claims 1 to 6, wherein the atomizing gas comprises steam and said oxygen containing gas is introduced into said combustion chamber, in a stoichiometric excess amount with respect to said liquid fuel, into intimate association with said conical spray, and wherein the design of said passageways, the pressure differential between said mixing chamber and said combustion chamber, and the stoichiometric excess of said oxygen relative to said liquid fuel are all selected in combination such that the amount of NOₓ emitted as exhaust from said combustion chamber is minimized.

8. An atomizer for combusting liquid fuel, comprising:
- an enclosed mixing chamber (16),
- means for introducing said fuel (22) to be atomized and an atomizing gas (24) into said mixing chamber (16),
- means for atomizing said fuel (22) with said atomizing gas (24) in said mixing chamber (16) to form a mixture of atomized fuel (22) in said atomizing gas (24),
- means for pressurizing said mixture in said mixing chamber (16),
- nozzle means (28) adapted to allow said pressurized mixture to be forced out of said mixing chamber (16) as a substantially conically shaped spray emerging from said nozzle means (28) towards a combustion chamber, said nozzle means (28) defining a direction of longitudinal extension from an end of said nozzle means (28) proximate to said mixing chamber (16) to an end of said nozzle means (28) proximate to said combustion chamber,
in particular for effecting the method of one of claims 1 to 7,
**characterized in**
that said nozzle means (28) comprise a plurality of substantially conically arranged passageways (28) separated from each other by segmentation means (34, 36, 38) substantially extending in said direction of longitudinal extension of said nozzle means (28) and extending at least part way along the length of said nozzle means (28) from the end thereof proximate to said mixing chamber (16) to the end thereof proximate to said combustion chamber, said segmentation means (34, 36, 38) occupying a minor portion of said nozzle means (28) in a circumferential direction thereof, such that said spray emerging from said nozzle means (28) is a segmented spray with alternating atomized fuel-rich and atomized fuel-lean segments and has a non-uniform bulk density and/or composition along its periphery.

9. Atomiser of claim 8, wherein said nozzle means comprise a substantially frusto-conical inside wall (32) and a substantially frusto-conical outside wall (30), said passageways being defined between said inside and outside walls, and wherein said segmentation means comprise at least one pier member (34, 36, 38) disposed between said inside and outside walls.

10. Atomizer of claim 9, wherein said segmentation means comprise at least two circumferentially spaced pier members.

11. Atomizer of claim 10, wherein said segmentation means comprise two, three or four pier members.

12. Atomizer of claim 10 or 11, wherein said pier members are circumferentially symmetrically located.

13. Atomizer of one of claims 9 or 12, wherein said at least one pier member is disposed at least at the end of said nozzle means remote from said mixing chamber.

14. Atomizer of one of claims 9 to 13, wherein said at least one pier member extends over substantially the entire length of said nozzle means from the end thereof proximate to said mixing chamber to the end thereof proximate to said combustion chamber.

15. Atomizer of one of claims 8 to 14, wherein the passageways form a vertex angle of about 50° to 100°.

16. Atomizer of claim 15, wherein the vertex angle is about 90°.

17. Atomizer of one of claims 9 to 16, wherein said inside and outside walls are substantially parallel to each other.

18. Atomizer of one of claims 9 to 16, wherein said inside and outside walls diverge from each other by up to about 15°.

19. Atomizer of one of claims 9 to 18, wherein said inside and outside walls are spaced apart by about 0,794 mm (1/32 inch) to 12,7 mm (1/2 inch).

20. Atomizer of one of claims 9 to 19, wherein said outside wall has a larger effective surface area as said inside wall.

21. Atomizer of one of claims 8 to 20, wherein said nozzle means are so designed and arranged that said conical spray is not substantially disrupted after it leaves said nozzle means.

## Patentansprüche

1. Verfahren zum Verbrennen von flüssigem Brennstoff (22), umfassend die Schritte:
- Zerstäuben des flüssigen Brennstoffes (22) zusammen mit einem Zerstäubungsgas (24) in einer Mischkammer (16), um ein Gemisch von zerstäubten Tröpfchen aus flüssigem Brennstoff in dem Zerstäubungsgas (24) zu bilden,
- Drücken des Gemisches der Tröpfchen aus zerstäubtem flüssigem Brennstoff in dem Zerstäubungsgas (24) durch ein Düsenmittel (28), wodurch das Gemisch zu einem im wesentlichen kegelförmigen Sprühnebel ausgebildet wird, welcher aus dem Düsenmittel (28) zu einer Brennkammer austritt, wobei das Düsenmittel (28) eine Richtung einer Längserstreckung von einem Ende des Düsenmittels (28) nahe der Mischkammer (16) zu einem Ende des Düsenmittels (28) nahe der Brennkammer definiert, und
- In-Kontakt-Bringen des Sprühnebels zumindest mit einer ausreichenden Menge an oxidierendem Gas, um wenigstens einen wesentlichen Teil des flüssigen Brennstoffs unter Bedingungen zu verbrennen, welche zu einer Verbrennung des flüssigen Brennstoffs mit Sauerstoff in dem oxidierenden Gas führen,
**dadurch gekennzeichnet**,
daß der Schrift des Drückens des Gemisches durch das Düsenmittel (28) umfaßt: Drücken des Gemisches durch eine Mehrzahl von im wesentlichen kegelförmig angeordneten Durchgängen (28), welche durch Unterteilungsmittel (34, 36, 38) voneinander getrennt sind, die sich im wesentlichen in der Richtung der Längserstreckung des Düsenmittels (28) erstrecken und die sich zumindest teilweise entlang der Länge des Düsenmittels (28) von dessen der Mischkammer (16) nahen Ende zu dessen der Verbrennungskammer nahen Ende erstrecken, wobei die Unterteilungsmittel (34, 36, 38) einen kleineren Teil des Düsenmittels (28) in einer Umfangsrichtung desselben einnehmen, derart, daß der aus dem Düsenmittel (28) austretende Sprühnebel ein unterteilter Sprühnebel mit abwechselnden brennstoffreichen und brennstoffarmen Abschnitten ist und eine ungleichmäßige Massendichte und/oder Zusammensetzung entlang seines Umfangs aufweist.

2. Verfahren nach Anspruch 1, wobei der flüssige Brennstoff Heizöl ist.

3. Verfahren nach Anspruch 1 oder 2, wobei das oxidierende Gas Luft ist.

4. Verfahren nach Anspruch 3, wobei der flüssige Brennstoff schweres Heizöl ist und die Ungleichmäßigkeit des kegelförmigen Sprühnebels zusammen mit dem Verhältnis von Luft zu Heizöl ausreichend ist, um die Erzeugung von NOₓ zu minimieren.

5. Verfahren nach einem der Ansprüche 1 bis 4, wobei der flüssige Brennstoff und das Zerstäubungsgas auf eine Innenwandung der Mischkammer unter Bedingungen auftreffen, welche hinreichend sind, um eine Vermischung des Brennstoffes und des Zerstäubungsgases zu bewirken und um eine Zerstäubung des Brennstoffes in dem Zerstäubungsgas zu bewirken.

6. Verfahren nach einem der Ansprüche 1 bis 5, wobei das Zerstäubungsgas Luft und/oder Dampf umfaßt.

7. Verfahren nach einem der Ansprüche 1 bis 6, wobei das Zerstäubungsgas Dampf umfaßt und das Sauerstoff enthaltende Gas in die Brennkammer in einer Menge stöchiometrischen Überschusses bezüglich des flüssigen Brennstoffs in enger Zuordnung zu dem kegelförmigen Sprühnebel eingeführt wird, und wobei die Gestalt der Durchgänge, das Druckdifferential zwischen der Mischkammer und der Brennkammer und der stöchiometrische Überschuss des Sauerstoffs relativ zu dem flüssigen Brennstoff alle in Kombination derart gewählt werden, daß die Menge an als Abgas von der Brennkammer abgegebenem NOₓ minimiert wird.

8. Zerstäuber zum Verbrennen von flüssigem Brennstoff, umfassend:
- eine umschlossene Mischkammer (16),
- ein Mittel zum Einführen des zu zerstäubenden Brennstoffs (22) und eines Zerstäubungsgases (24) in die Mischkammer (16),
- ein Mittel zum Zerstäuben des Brennstoffs (22) mit dem Zerstäubungsgas (24) in der Mischkammer (16), um ein Gemisch aus zerstäubtem Brennstoff (22) in dem Zerstäubungsgas (24) zu bilden,
- ein Mittel zum Unter-Druck-Setzen des Gemisches in der Mischkammer (16),
- ein Düsenmittel (28), welches dazu ausgelegt ist, ein Herausdrücken des unter Druck gesetzten Gemisches aus der Mischkammer (16) heraus in Form eines aus dem Düsenmittel (28) zu einer Brennkammer austretenden im wesentlichen kegelförmigen Sprühnebels zu ermöglichen, wobei das Düsenmittel (28) eine Richtung einer Längserstreckung von einem der Mischkammer (16) nahen Ende des Düsenmittels (28) zu einem der Brennkammer nahen Ende des Düsenmittels (28) definiert,
insbesondere zum Ausführen des Verfahrens nach einem der Ansprüche 1 bis 7,
**dadurch gekennzeichnet**,
daß das Düsenmittel (28) eine Mehrzahl von im wesentlichen kegelförmig angeordneten Durchgängen (28) umfaßt, welche voneinander durch Unterteilungsmittel (34, 36, 38) getrennt sind, die sich im wesentlichen in Richtung der Längserstreckung des Düsenmittels (28) erstrecken und sich wenigstens zum Teil entlang der Länge des Düsenmittels (28) von seinem der Mischkammer (16) nahen Ende zu seinem der Brennkammer nahen Ende erstrecken, wobei die Unterteilungsmittel (34, 36, 38) einen kleineren Teil des Düsenmittels (28) in einer Umfangsrichtung desselben einnehmen, derart, daß der von dem Düsenmittel (28) austretende Sprühnebel ein unterteilter Sprühnebel mit abwechselnden an zerstäubtem Kraftstoff reichen und an zerstäubtem Kraftstoff armen Abschnitten ist und eine ungleichmäßige Massendichte und/oder Zusammensetzung entlang seines Umfangs aufweist.

9. Zerstäuber nach Anspruch 8, wobei das Düsenmittel eine im wesentlichen kegelstumpfförmige Innenwandung (32) und eine im wesentlichen kegelstumpfförmige Außenwandung (30) umfaßt, wobei die Durchgänge zwischen der Innenwandung und der Außenwandung definiert sind, und wobei die Unterteilungsmittel wenigstens ein Stegelement (34, 36, 38) umfassen, welches zwischen der Innenwandung und der Außenwandung angeordnet ist.

10. Zerstäuber nach Anspruch 9, wobei die Unterteilungsmittel wenigstens zwei in Umfangsrichtung voneinander im Abstand angeordnete Stegelemente aufweisen.

11. Zerstäuber nach Anspruch 10, wobei die Unterteilungsmittel zwei, drei oder vier Stegelemente aufweisen.

12. Zerstäuber nach Anspruch 10 oder 11, wobei die Stegelemente in Umfangsrichtung symmetrisch angeordnet sind.

13. Zerstäuber nach einem der Ansprüche 9 oder 12, wobei wenigstens ein Stegelement zumindest an dem der Mischkammer fernen Ende des Düsenmittels angeordnet ist.

14. Zerstäuber nach einem der Ansprüche 9 bis 13, wobei das wenigstens eine Stegelement sich im wesentlichen über die gesamte Länge des Düsenmittels von dessen der Mischkammer nahen Ende zu dessen der Brennkammer nahen Ende erstreckt.

15. Zerstäuber nach einem der Ansprüche 8 bis 14, wobei die Durchgänge einen Scheitelwinkel von ungefähr 50° bis 100° bilden.

16. Zerstäuber nach Anspruch 15, wobei der Scheitelwinkel ungefähr 90 beträgt.

17. Zerstäuber nach einem der Ansprüche 9 bis 16, wobei die Innenwandung und die Außenwandung im wesentlichen parallel zueinander sind.

18. Zerstäuber nach einem der Ansprüche 9 bis 16, wobei die Innenwandung und die Außenwandung um bis zu 15° auseinander laufen.

19. Zerstäuber nach einem der Ansprüche 9 bis 18, wobei die Innenwandung und die Außenwandung im Abstand von etwa 0,794 mm (1/32 Zoll) bis etwa 12,7 mm (1/2 Zoll) angeordnet sind.

20. Zerstäuber nach einem der Ansprüche 9 bis 19, wobei die Außenwandung eine größere wirksame Oberflächenausdehnung als die Innenwandung aufweist.

21. Zerstäuber nach einem der Ansprüche 8 bis 20, wobei das Düsenmittel derart ausgebildet und angeordnet ist, daß der kegelförmige Sprühnebel nach dem Verlassen des Düsenmittels im wesentlichen nicht aufbricht.

## Revendications

1. Procédé de combustion d'un carburant liquide (22), comprenant les étapes consistant à :
- atomiser ledit carburant liquide (22) avec un gaz atomiseur (24) dans une chambre de mélange (16) pour former un mélange de gouttelettes de carburant liquide atomisé dans ledit gaz atomiseur (24),
- forcer ledit mélange desdites gouttelettes de carburant liquide atomisé dans ledit gaz atomiseur (24) à travers des moyens formant buses (28), de façon à former ledit mélange an une vaporisation de forme sensiblement conique sortant desdits moyens formant buses (28) vers une chambre de combustion, lesdits moyens formant buses (28) définissant une direction d'extension longitudinale à partir d'une extrémité desdits moyens formant buses (28) proche de ladite chambre de mélange (16) jusqu'à une extrémité desdits moyens formant buses (28) proche de ladite chambre de combustion, et
- meure en contact ladite vaporisation avec au moins une quantité suffisante de gaz oxydant pour brûler au moins une partie sensible dudit carburant liquide dans des conditions conduisant la combustion dudit carburant liquide avec l'oxygène situé dans ledit gaz oxydant,
caractérisé en ce que
l'étape de forçage dudit mélange à travers lesdits moyens formant buses (28) comprend le forçage dudit mélange à travers une pluralité de passages agencés de façon sensiblement conique (28) séparés les uns des autres par des moyens de segmentation (34, 36, 38) s'étendant sensiblement dans ladite direction d'extension longitudinale desdits moyens formant buses (28) et s'étendant au moins an partie sur la longueur desdits moyens formant buses (28) à partir de leur extrémité proche de ladite' chambre de mélange (16) jusqu'à leur extrémité proche de ladite chambre de combustion ; lesdits moyens de segmentation (34, 36, 38) occupant une partie mineure desdits moyens formant buses (28) dans une direction circonférentielle de ceux-ci, de façon que ladite vaporisation sortant desdits moyen formant buses (28) soit une vaporisation segmentée avec des segments alternés riches en carburant et pauvres an carburant et ait une densité de masse et/ou une composition non-uniforme sur sa périphérie.

2. Procédé selon la revendication 1, dans lequel le carburant liquide est du gazole.

3. Procédé selon la revendication 1 ou 2, dans lequel le gaz oxydant est de l'air.

4. Procédé selon la revendication 3, dans lequel le carburant liquide est du gazole lourd et la non-uniformité de ladite vaporisation conique ainsi que le rapport entre l'air et le gazole sont suffisants pour minimiser la production de NOₓ.

5. Procédé selon l'une des revendications 1 à 4, dans lequel le carburant liquide et le gaz atomiseur frappent une paroi intérieure de ladite chambre de mélange dans des conditions suffisante pour provoquer le mélange mutuel du carburant et du gaz atomiseur et pour provoquer l'atomisation du carburant dans le gaz atomiseur.

6. Procédé selon l'une des revendications 1 à 5, dans lequel le gaz atomiseur comprend de l'air et/ou de la vapeur.

7. Procédé selon l'une des revendications 1 à 6, dans lequel le gaz atomiseur comprend de la vapeur et ledit gaz contenant de l'oxygène est introduit dans ladite chambre de combustion, dans une quantité supérieure à la quantité stoechiométrique par rapport audit carburant liquide, an association étroite avec ladite vaporisation conique et dans lequel la conception desdits passages, la pression différentielle entre ladite chambre de mélange et ladite chambre de combustion, et le dépassement stoechiométrique dudit oxygène par rapport audit carburant liquide sont tous sélectionnés en association de façon que le quantité de NOₓ émis comme échappement de ladite chambre de combustion soit minimisée.

8. Atomiseur pour la combustion d'un carburant liquide, comprenant :
- une chambre de mélange fermée (16),
- des moyens pour introduire ledit carburant (22) destiné à être à atomisé et un gaz atomiseur (24) dans ladite chambre de mélange (16),
- des moyens pour atomiser ledit carburant (22) avec ledit gaz atomiseur (24) dans ladite chambre de mélange (16) pour former un mélange de carburant atomisé (22) dans ledit gaz atomiseur (24),
- des moyens pour pressuriser ledit mélange dans ladite chambre de mélange (16),
- des moyens formant buses (28) adaptés pour permettre audit mélange pressurisé d'être forcé vers l'extérieur de ladite chambre de mélange (16) sous la forme d'une vaporisation de forme sensiblement conique sortant desdits moyens formant buses (28) vers une chambre de combustion, lesdits moyens formant buses (28) définissant une direction d'extension longitudinale à partir d'une extrémité desdits moyens formant buses (28) proche de ladite chambre de mélange (16) jusqu'à une extrémité desdits moyens formant buses (28) proche de ladite chambre de combustion,
en particulier pour exécuter le procédé selon l'une des revendications 1 à 7,
caractérisé en ce que
lesdits moyens formant buses (28) comprennent une pluralité de passages agencés de façon sensiblement conique (28) séparés les uns des autres par des moyens de segmentation (34, 36, 38) s'étendant sensiblement dans ladite direction d'extension longitudinale desdits moyens formant buses (28) est s'étendant au moins en partie sur la longueur desdits moyens formant buses (28) à partir de leur extrémité proche de ladite chambre de mélange (16) jusqu'à leur extrémité proche de ladite chambre de combustion, lesdits moyens de segmentation (34, 36, 38) occupant une partie mineure desdits moyens formant buses (28) dans une direction circonférentielle de ceux-ci, de façon que ladite vaporisation sortant desdits moyens formant buses (28) soit une vaporisation segmentée avec des segments alternés atomisés riches en carburant et atomisés pauvres on carburant et ait une densité de masse et/ou une composition non-uniforme sur sa périphérie.

9. Atomiseur selon la revendication 8, dans lequel lesdits moyens formant buses comprennent une paroi intérieure sensiblement tronconique (32) et une paroi extérieure sensiblement tronconique (30), ledit passage étant défini entre lesdites parois intérieure et extérieure et dans lequel lesdits moyens de segmentation comprennent au moins un organe en pilier (34, 36, 38) disposé entre lesdites parois intérieure et extérieure.

10. Atomiseur selon la revendication 9, dans lequel lesdits moyens de segmentation comprennent au moins deux organe en pilier circonférentiellement espacés.

11. Atomiseur selon la revendication 10, dans lequel lesdits moyens de segmentation comprennent deux, trois ou quatre organes en pilier.

12. Atomiseur selon la revendication 10 ou 11, dans lequel lesdits organes en pilier sont localisés de façon circonférentiellement symétrique.

13. Atomiseur selon l'une des revendications 9 ou 12, dans lequel ledit au moins un organe en pilier est disposé au moins à l'extrémité desdits moyens formant buses distante de ladite chambre de mélange.

14. Atomiseur selon l'une des revendications 9 à 13, dans lequel ledit au moins un organe en piller s'étend sensiblement sur toute le longueur desdits moyens formant buses à partir de leur extrémité proche de ladite chambre de mélange jusqu'à leur extrémité proche de ladite chambre de combustion.

15. Atomiseur selon l'une des revendications 8 à 14, dans lequel les passages forment un angle au sommet d'environ 50° à environ 100°.

16. Atomiseur selon la revendication 15, dans lequel l'angle au sommet est d'environ 90°.

17. Atomiseur selon l'une des revendications 9 à 16, dans lequel lesdites parois intérieure et extérieure sont sensiblement parallèles entre elles.

18. Atomiseur selon l'une des revendications 9 à 16, dans lequel lesdites parois intérieure et extérieure divergent l'une par rapport à l'autre d'environ 15°.

19. Atomiseur selon l'une des revendications 9 à 18, dans lequel lesdites parois intérieure et extérieure sont espacées d'environ 0,794 mm (1/32 pouce) à 12,7 mm (1/2 pouce).

20. Atomiseur selon l'une des revendications 9 à 19, dans lequel ladite paroi extérieure comporte une aire de surface effective plus grande que ladite paroi intérieure.

21. Atomiseur selon l'une des revendications 8 à 20, dans lequel lesdits moyens formant buses sont conçus et agencés de telle façon que ladite vaporisation conique ne soit pas sensiblement interrompue après avoir quitté lesdits moyen formant buses.
